# EUROPEAN PATENT SPECIFICATION

(11) **EP 1 440 727 B1**
(45) Date of publication and mention of the grant of the patent: **16.07.2008**
(21) Application number: 04001070.4
(22) Date of filing: 20.01.2004
(51) Int. Cl.: B01D 67/00, B01D 69/02, B01D 71/34, B01D 71/42, B01D 71/68

(54) **Membrane flux enhancement**
Methode zur Erhöhung des transmembranen Flusses
Procédé pour augmenter le flux transmembranaire

(30) Priority: 20.01.2003 US 348482
(43) Date of publication of application: 28.07.2004
(73) Proprietor: SPECIAL MEMBRANE TECHNOLOGIES, INC., Oceanside, CA 92056 (US)
(72) Inventor: Cummings, James A., Escondido CA 92027 (US)
(74) Representative: HOFFMANN EITLE

(56) References cited:
- EP-A- 0 445 853
- EP-A- 0 750 938
- WO-A-01/05492
- US-A- 4 087 388
- US-A- 4 113 912
- US-A- 4 794 002
- US-A- 4 802 987

## Description

This invention relates to microporous membranes for liquid separation processes, and more particularly, it relates to methods for increasing the water flux of microporous membranes and even more particularly to microfiltration and ultrafiltration membranes which have been treated by such a method.

### Field of the Invention

Polymeric membranes have, for the last several decades, moved into prominence for liquid separation processes, and somewhat loosely defined categories have become established to refer to such membranes, i.e. reverse osmosis (RO) membranes, nanofiltration (NF) membranes, ultrafiltration (UF) membranes, and mircrofiltration (MF) membranes. These categories generally represent a difference in average pore size, with the four above-enumerated categories ranging from the smallest to the largest pores. For example, microfiltration membranes are often characterized as membranes having an average pore size between about 0.05 µm and about 30 µm; however, ultrafiltration membranes are sometimes said to extend from about 10 µm down to about 0.001 µm. It can thus be seen that there is some overlap in these categories.

Although ultrafiltration and mircofiltration membranes have become well developed commercial products over at least the past two decades, the industry has continually sought to improve the characteristics of these membranes, and one characteristic that has been a target for such improvement has been water flux through the membrane.

### Background of the Invention

Attempts have long been made to increase water flux through membranes used for all of these various categories of separation processes. Such attempts have included treatment of the fmished membrane, either chemically and/or physically; a modification of the methods and/or materials used in making the polymeric membranes. For example, U.S. Patent No. 4,990,294 taught stretching, drying and heat setting of microporous fluorocarbon membranes. U.S. Patent No. 5,755,964 taught that the treatment of RO or NF membranes having a polyamide discriminating layer could substantially increase in their water flux, by treatment with ammonia or a substituted ammonia. In the early days of cellulose acetate (CA) membranes U.S. Patent No. 3,873,653 taught that such a low flux asymmetric RO membrane could be converted to a high flux membrane by annealing for 30 minutes at a high temperature to dissolve a low molecular weight plasticizer therein and then quenching in water at room temperature for about 15 minutes. U.S. Patent No. 4,802,987 taught that cellulose acetate pervaporation membranes could be provided with substantially higher flux for use in aromatic separation processes as a result of being impregnated with 10 to 25 weight percent polyethylene glycol (PEG), which was felt to operate as a pore-stabilizer and prevent pore collapse following drying. U.S. Patent No. 4,087,388 to Jensen et al. teaches the improvement of water flux through an aromatic, nitrogen-linked, synthetic organic polymeric membrane, such as a polyamide RO membrane, by incorporating a specific type of surfactant in the rinse medium that is used to quench and extract the salts and solvent from such a membrane following its casting; PEG monostearate is disclosed as a preferred nonionic surfactant.

US 4,794,002 describes a process for surface modifying a variety of polymeric support surfaces in which a predetermined modifying polymer is irreversibly absorbed onto essentially all surfaces of the support polymer accessible to the modifying polymer.

WO 01/05492 A discloses microporous membranes comprising polyvinylidene difluoride and methods for making such membranes. The membranes are not cross-linked and are not contacted with a strong alkali solution during manufacture and include a support and surfaces treated with a hydrophilic coating.

US 4,802,987 discloses a process, wherein aromatic hydrocarbons present in a hydrocarbon feed stream containing a mixture of aromatic hydrocarbons and non-aromatic saturated organic components are separated from said hydrocarbon feed stream by selective permeation of the aromatic hydrocarbon through a regenerated cellulose or cellulose acetate membrane which has been impregnated with polyethylene glycol having a MW in the range 600-14.000.

EP 0 750 938 A relates to polysulfone hollow fibre semi-permeable membranes suitable for

use in removing undesired contaminants from blood in particular in an artificial kidney. The membranes can be prepared by spinning hollow fibres from a spinning solution comprising a polysulfone, a hydrophilic polymer, a solvent and water, the spinning solution having a defined viscosity. The hollow fibre is immersed in a welting agent, e.g. glycerine, PEG or PPG.

None of these patents that disclosed methods for potentially increasing membrane flux were felt to demonstrate treatment methods that would be satisfactory to increase water flux in ultrafiltration and microfiltration membranes, and the search has continued for improvements.

### Summary of the Invention

Very generally, the invention provides methods for increasing the water flux of polymeric microporous membranes designed for use in liquid separation processes by treating a fabricated membrane with a solution of a chemical agent that modifies the characteristics of the membrane so as to substantially increase the water flux of the membrane with essentially no concurrent reduction in the solute-retention properties of the membrane, with the chemical agent being one that readily passes through the membrane pores; as a result, improved microporous membranes are obtained which are useful in liquid separation processes.

A method for increasing the water flux of microporous membranes, which method comprises treating a polymeric microporous membrane with a solution of a water-soluble polymer that modifies characteristics of said membrane so as to substantially increase the water flux of the membrane with essentially no reduction in the solute-retention properties for the membrane, said water-soluble polymer being such that it readily passes through the pores of the microporous membrane.

Somewhat more particularly, the invention provides polymeric mircroporous membranes useful for liquid separation processes, particularly membranes having an average pore size between about 0.0 1 µm and about 5 µm, which as a result of treatment with an aqueous solution of poly(ethylene glycol) (PEG) having a molecular weight between about 1000 and about 10.000 Dalton, experience an increase in water flux of at least about 50% without a proportional decrease in solute rejection. An ultimate water flux for the treated membrane of greater than 50 liters per square meter per hour per bar of applied pressure (L/m²h bar) is often obtained for UF membranes having an initial water flux of less than 10 L/m²h bar.

In another particular aspect, the invention provides a microporous membrane which is constructed for liquid separation processes which membrane comprises a polymeric membrane having an average pore size between about 0.001 µm and about 30 µm; said membrane having been treated with an aqueous solution of a linear, water-soluble polymer having -CH₂- groups and -OH and/or -O- groups poly(ethylene glycol) (PEG) having a molecular weight between about 1000 and about 10.000 Dalton; and as a result of said treatment, said microporous membrane has experienced an increase in water flux of at least about 50% without a proportional decrease in solute rejection.

### Detailed Description of the Preferred Embodiments

The invention provides microporous membranes that exhibit increased water flux when employed in liquid separation processes as a result of their treatment with an aqueous solution of a chemical agent, preferably a water-soluble organic polymer. The microporous membranes that are felt to be most benefitted by this treatment are those which are categorized in the industry as ultrafiltration membranes and microfiltration membranes, and which are made from polymeric materials. Unfortunately, there is no industry standard for the pore sizes that constitute an ultrafiltration membrane, and membranes having pore sizes in the range of 10 microns to about 0.001 micron have been variously referred to as ultrafiltration (UF) membranes. Similarly, there are no tight standards for microfiltration (MF) membranes, so it is particularly difficult to state where ultrafiltration membranes stop and microfiltration membranes begin. Very generally, MF membranes have an average pore size between 0.05 microns and 30 microns. Of primary interest for purposes of this application are those microporous membranes having an average pore size between about 0.01 microns and 5 microns, which membranes are constructed for use in liquid separation processes, such as potable water production, wastewater reclamation and removal of colloids, such as latex paints and oil-water emulsions.

It is believed that a wide variety of polymeric microporous membranes are benefitted by treatment by the method of this invention insofar as the water flux therethrough is very substantially increased with no significant adverse effects in other characteristics such as solute rejection, strength, durability, chemical resistance, etc. The present invention relates to the treatment of microporous membranes that are formed of polysulfone (PS), polyethersulfone (PES), polyacrylonitrile (PAN) and polyvinylidenefluoride (PVDF). These polymeric materials have frequently been used to fabricate ultrafiltration and microfiltration membranes, which it has been shown can be benefitted by this treatment to increase the water flux. The membranes are fabricated as they normally have been, and following their fabrication, they are subjected to the treatment of interest. Of greatest interest are polymeric membranes having an average pore size between about 0.01 micron and about 5 microns, and within this category, it has been found that treatments of PS or PES ultrafiltration membranes and PVDF microfiltration membranes have proved particularly beneficial in the enhancement of water flux through these membranes without significant diminution of the solute-rejection capability of the membrane.

The water-soluble chemical agent that is used is poly(ethylene glycol) (PEG) Suitable linear polymers are those having a molecular weight in range of between about 1,000 and 10.000 Daltons.

The present invention relates to the treatment of chemical agents are poly(ethylene glycol) (PEG) and aqueous solutions of these polymers having molecular weights between about 1,000 and about 8,000, and more preferably between about 2,000 and about 6,000 are employed. In any event, the linear polymer must be one that readily passes through the pores of the membrane being treated, i.e. one that is rejected by the membrane being treated in an amount of less than 25%; preferably it should be one that is rejected in an amount less than 15%, and most preferably about 10% or less. The concentration of the linear polymer in the treatment solution can vary between about 10 and 5,000 mg/L. Preferably, the solution contains at least about 50 mg/L, and most preferably, a solution containing about 100 and 1,000 mg/L is used.

It is advantageous that the treatment can be carried out at ambient temperature, and generally a temperature in the range of 0° to 50°C is conveniently employed. It is not felt that any particular advantage is obtained from operating at either end of this temperature range.

The fabricated membrane can be exposed or subjected to the aqueous solution in any suitable manner that allows the solution to permeate into and/or through the microporous structure; thus, coating, soaking, and other similar methods of application may be employed. The duration of time of exposure does not appear to be critical so long as such permeation does occur. According to the invention, the method of treatment uses of pressure or vacuum to cause the solution to pass through the mircroporous membrane. As indicated above, the molecular weight of the linear polymer is chosen such that its rejection by the microporous membrane through which it is being forced to permeate is not greater than about 25% so as to be certain sufficient of the linear polymer reached the interstices of the membrane.

As indicated previously, the significant advantage that results from this treatment is an enhancement of the water flux through such a previously fabricated membrane, and such treatment is carried out so that the membrane will have experienced an increase in water flux of at least about 50% above that which the untreated membrane exhibits under identical conditions of testing. However, such is considered to be a minimum and improvement in the water flux by amounts of 100% to 200% following treatment are common. As will be seen from the examples that follow, improvements of a far greater extent are often surprisingly achieved. It has been found that, following treatment of UF membranes having an initial water flux of less than 10L/m²h bar, the flux is increased so that the membrane now exhibits a flux of greater than 10 Lmh/bar and preferably of greater than about 50 L/m²h bar. It is noted that 1 bar = 14.5 psia = 0.97 atm. As also previously mentioned, the physical characteristics and the solute-rejecting characteristics of the membrane are not substantially adversely affected by the treatment, and the latter is also shown by measurement of solute-rejection capability of a UF membrane under identical test conditions, both before and after treatment in various of the examples that follow.

The following examples set forth illustrative embodiments of the successful application of the method of treatment of the invention to produce superior microporous membranes; however it should be understood that these examples do not constitute limitations upon the scope of the invention which is of course set forth in the claims that are appended hereto.

### Example 1

A polysulfone ultrafiltration membrane sold by Special Membrane Technologies, Inc. (SEPRO) as its PS-20 membrane, which is characterized by standard testing as rejecting greater than 97.5% of an aqueous solution of 20,000 Dalton MW PEG was tested for water flux. Six samples of the membrane, each being 14.2 cm² (2.2 in², were evaluated using a standard sheet membrane system using RO-purified tap water and an average applied pressure of about 2.4 bar (2.37 atm or 2.45 kg/cm²). After operating the test system for five minutes, the pure water flux was measured and was found to be 120 L/m²h bar. This is typical of a UF membrane having a 20,000 MW cutoff.

The six membrane samples were then subjected to a aqueous solution containing 200 mg/L of 6,000 MW PEG in RO-purified tap water. After less than one minute of operation, the water flux was seen to increase dramatically, and testing after about five minutes of operation at 2.4 bar applied pressure shows the flux has increased to an average about 880 L/m²h bar. The membrane rejection rate for this PEG linear polymer is measured also and is found to be quite low, i.e. only about 2.8%.

The six membrane samples were then flushed with RO-purified tap water for about 5 minutes and then cleaned using a caustic cleaner sold commercially as Ultrasil 10. Next, the membrane samples were cleaned with an acidic cleaner sold commercially as Ultrasil 76. As a result of these two cleaning steps, the PEG is essentially completely removed from the membrane samples. Thereafter, the six samples were again tested with RO-purified tap water at an applied pressure of about 2.4 bar, and the average pure water flux that was measured was about 790 L/m²h bar. This indicates that the increased water flux that resulted from the PEG treatment step remains a characteristic of the PS-20 membranes even after its subjection to caustic and acidic cleaning.

The six membrane samples were then retested with a 2000 mg/L aqueous solution of 20,000 MW PEG. Substantially, the same rejection as initially obtained, i.e. a rejection of about 97.5% was measured. Thus, it can be seen that the treatment with the 6000 MW PEG did not adversely affect the solute-rejection characteristic of the PS membrane, namely, its ability to reject the 20,000 MW PEG. However, after this testing with the 20,000 MW PEG to ascertain that this was indeed the case, the water flux of the membranes had as a result dropped to about 20 L/m²h bar, as expected, due to concentration polarization.

### Example 2

A polyvinyldene fluoride (PVDF) microfiltration membrane that is manufactured by SEPRO and sold commercially as their PVDF-MF membrane has an average pore size of about 0.15 µm. Two membrane samples of 14.2 cm² (2.2in²) each were evaluated using the standard sheet membrane test system. The pure water flux of each was measured at an average applied pressure of about 1.4 bar, again using RO-purified tap water. After operating the system for 5 minutes, the pure water flux was measured and found to be about an average of 114 L/m²h bar.

These membranes were then subjected to treatment with a 200 mg/L solution of 6,000 PEG in RO-purified tap water. Again, after less than one minute of operation, the water flux increased dramatically. After about 5 minutes, the flux was measured, and an average increase to 1026 L/m²h bar was obtained. The PVDF-MF has substantially no rejection for 6000 MW PEG. This nine-fold increase over the pure water flux of the pretreated membranes is again dramatic.

### Example 2A

An additional group of samples of the PVDF-MF membranes of Example 2 are treated using a 200 mg/L solution of 2000 MW PEG at an applied pressure of about 2.5 bar for two minutes. The average water flux is again found to very substantially increase as a result of this treatment.

### Example 3

Samples of another PS UF membrane were tested and found to have an average pure water flux, when tested using RO-purified tap water at an applied pressure of 2.4 bar, of only about 8 L/m²h bar which is considered to be economically unacceptable. Six 14.2 cm² (2.2in²) samples were treated, as in Example 1, with an aqueous solution containing 200 mg/L of 6000 MW PEG at an applied pressure of about 2.5 bar for two minutes. It was surprisingly found that the pure water flux increased to about 570 L/m²h bar, more than a 70-fold increase.

Other samples of the same membrane were then tested for solute-rejection in a comparison test with those that had just been found to have so dramatically increased in water flux. Both sets of membrane samples were evaluated using the standard solution of 2000 mg/L of 20,000 MW PEG in RO-purified tap water. Both sets of sample membranes were found to reject about 98% of the 20,000 MW PEG.

### Example 4

An additional group of six samples, each about 14.2 cm² (2.2 in²), from another low flux PS UF membrane, were flux-tested and found to measure only about 4.6 L/m²h bar. Treatment was carried out using a 200 mg/L solution of 2000 MW PEG at applied pressure of about 2.5 bar for two minutes. The average water flux was then measured and was found to be about 550 L/m²h bar, which represents a 120-fold increase as a result of this treatment.

### Example 5

An additional six samples of another PS membrane having an unacceptable water flux of only about 3.2 Lmh/bar were this time subjected to similar permeation treatment using a 200 mg/L aqueous solution of 4000 MW PEG in RO-purified water for two minutes at an applied pressure of about 2.5 bar. The water flux was then measured and showed an increase to about 480 L/m²h bar, which represents about a 150-fold increase.

### Example 6

Samples of yet another PS UF membrane were measured and found to have a pure water flux, when tested at 2.5 bar, of only about 7.4 L/m²h bar. These six samples were then treated in an aqueous solution of 200 mg/L of 3500 MW PPG for about 20 minutes. The results of flux testing then showed an average increase to about 12.1 L/m²h bar. Although this was not as dramatic as the increases that had been obtained using the treatment with various of the PEG linear polymers, it did show an increase of water flux of about 65.8%, which is certainly substantial.

### Example 7

Samples of a PES UF membrane are tested and found to have an average pure water flux, when tested using RO-purified tap water at an applied pressure of 2 bar, of 400 L/m²h bar. The membrane rejects greater than 95% of a 20,000 MW PEG in aqueous solution. Six 14.2 cm² (2.2 in²)samples are treated as in Example 1, with an aqueous solution containing 200 mg/L of 6000 MW PEG with an applied pressure of about 2.5 bar for two minutes. The pure water flux increases more than two-fold while the membrane continues to reject at least about 95% of the 20,000 MW PEG.

### Example 8

Samples of PAN UF membrane are tested and found to have an average pure water flux, when tested using RO purified tap water at an applied pressure of 2 bar, of 84 L/m²h bar. The membrane rejects more than 90% of 20,000 MW PEG in aqueous solution. Six 14.2 cm² (2.2 in²) samples are treated, as in Example 1, with an aqueous solution containing 200 mg/L of 6000 MW PEG using an applied pressure of about 2.5 bar for two minutes. The pure water flux increases more than two-fold while solute-rejection of 20,000 MW PEG in RO-purified tap water does not significantly change.

### Example 9

A polyvinyldene fluoride (PVDF) ultrafiltration membrane that is manufactured by SEPRO and sold commercially rejects more than 90% of 75,000 MW poly(vinyl alcohol) in aqueous solution. Membrane samples of 14.2 cm² (2.2 in²) each are evaluated using the standard sheet membrane test system. The pure water flux of each is measured using RO-purified tap water and found to be about an average of 200 L/m²h bar.

These membranes are subjected to treatment with a 200 mg/L solution of 6000 PEG in RO-purified tap water. After about 5 minutes, the flux shows a substantial increase of more than 100%, while the solute-rejection remains substantially unchanged.

### Example 10

Samples of a PS MF membrane are tested and found to have an average pure water flux, when tested using RO-purified tap water, of about 500 14.2 cm² (2.2 in²). L/m²h bar samples are treated, as in Example 1, with an aqueous solution containing 200 g/L of 6000 MW PEG. The pure water flux increases more than 100%.

The foregoing examples show that UF and MF membranes can have their water flux increased by more than 50% by treatments embodying the features of this invention. As a result, it is possible to routinely provide UF membranes which will exhibit a water flux of greater than 10 L/m²h bar and which very frequently will exhibit a water flux of at least 50 L/m²h bar even when the initial production membranes have a far lesser water flux, while at the same time continuing to exhibit the solute-rejection expected of UF membranes. In addition, the water flux of MF membranes can be dramatically increased, rendering them far more valuable commercially.

Particular features of the invention are set forth in the claims that follow.

## Claims

1. A method for increasing the water flux of a microporous membrane which is constructed for liquid separation processes which membrane comprises a polymeric membrane having an average pore size between about 0.001 µm and about 30 µm and being made of polysulfone (PS), polyethersulfone (PES), polyacrylonitrile (PAN) or polyvinylidene fluoride (PVDF);
which method comprises treating said polymeric microporous membrane with a solution containing between about 10 and 5 000 mg/L of a water-soluble linear polymer of poly(ethylene glycol) (PEG) having a molecular weight between about 1000 and about 8000 Daltons and which is rejected by the membrane in an amount less than 25%, wherein pressure or vacuum is applied to cause the solution to pass through the microporous membrane.

2. The method of Claim 1, wherein said solution has a concentration of PEG of about 100 to 1 000 mg/L.

3. The method according to any one of Claims 1 to 2, wherein the water flux is increased by at least 50%.

4. The method according to Claim 3, wherein said water flux is increased by 200% or more.

5. The method according to any one of Claims 1 to 4, wherein the water flux of the membrane having an initial water flux of less than 10 L/m² bar is increased to a flux of greater than 10 L/m² bar.

6. The method according to any one of Claim 1 to 5, wherein said membrane is made of PS or PES.

7. A microporous membrane that is obtainable by a treatment method according to any one of Claims 1 to 6, and has a water flux after treatment of at least 50% above that which the untreated membrane exhibits under identical conditions of testing.

## Patentansprüche

1. Verfahren zum Erhöhen des Wasserdurchflusses einer mikroporösen Membran, die für Flüssigtrennverfahren ausgelegt ist, die eine polymere Membran mit einer mittleren Porengröße zwischen ungefähr 0,001 µm und ungefähr 30 µm umfaßt und aus Polysulfon (PS), Polyethersulfon (PES), Polyacrylnitril (PAN) oder Polyvinylidenfluorid (PVDF) hergestellt ist,
welches das Behandeln der polymeren mikroporösen Membran mit einer Lösung umfaßt, die zwischen ungefähr 10 und 5.000 mg/l eines wasserlöslichen linearen Polymers von Poly(ethylenglycol) (PEG) mit einem Molekulargewicht zwischen ungefähr 1.000 und ungefähr 8.000 Dalton enthält und das durch die Membran in einer Menge von weniger als 25 % zurückgewiesen wird, wobei Druck oder Vakuum angelegt wird, um die Lösung durch die mikroporöse Membran treten zu lassen.

2. Verfahren gemäß Anspruch 1, wobei die Lösung eine Konzentration von PEG von ungefähr 100 bis 1.000 mg/l aufweist.

3. Verfahren gemäß einem der Ansprüche 1 bis 2, wobei der Wasserdurchfluß um wenigstens 50 % erhöht wird.

4. Verfahren gemäß Anspruch 3, wobei der Wasserdurchfluß um 200 % oder mehr erhöht wird.

5. Verfahren gemäß einem der Ansprüche 1 bis 4, wobei der Wasserdurchfluß der Membran mit einem Anfangswasserdurchfluß von weniger als 10 1/m²hbar auf einen Durchfluß von mehr als 10 1/m²hbar erhöht wird.

6. Verfahren gemäß einem der Ansprüche 1 bis 5, wobei die Membran aus PS oder PES hergestellt ist.

7. Mikroporöse Membran, die erhältlich ist durch ein Behandlungsverfahren gemäß einem der Ansprüche 1 bis 6 und einen Wasserdurchfluß nach Behandlung von wenigstens 50 % über dem aufweist, den die unbehandelte Membran unter gleichen Testbedingungen zeigt.

## Revendications

1. Procédé pour augmenter le flux d'eau d'une membrane microporeuse qui est construite pour des procédés de séparation de liquides, membrane qui comprend une membrane polymère ayant un diamètre moyen des pores compris entre environ 0,001 µm et environ 30 µm et qui est constituée d'une polysulfone (PS), d'une polyéthersulfone (PED), d'un polyacrylonitrile (PAN) ou d'un poly(fluorure de vinylidène) (PVDF) ;
procédé qui comprend le traitement de ladite membrane microporeuse polymère avec une solution contenant environ 10 à 5000 mg/l d'un polymère linéaire hydrosoluble de poly-(éthylèneglycol) (PEG) ayant un poids moléculaire compris entre environ 1000 et environ 8000 daltons et qui est rejeté par la membrane en une quantité inférieure à 25 %, où une pression ou un vide est appliqué pour provoquer le passage de la solution à travers la membrane poreuse.

2. Procédé suivant la revendication 1, dans lequel ladite solution a une concentration en PEG d'environ 100 à 1000 mg/l.

3. Procédé suivant l'une quelconque des revendications 1 et 2, dans lequel le flux d'eau est augmenté d'au moins 50 %.

4. Procédé suivant la revendication 3, dans lequel ledit flux d'eau est augmenté de 200 % ou plus.

5. Procédé suivant l'une quelconque des revendications 1 à 4, dans lequel le flux d'eau de la membrane ayant un flux d'eau initial inférieur à 10 1/m².h.bar est porté à un flux supérieur à 10 1/m².h.bar.

6. Procédé suivant l'une quelconque des revendications 1 à 5, dans lequel ladite membrane est constituée de PS ou de PES.

7. Membrane microporeuse qui peut être obtenue par un procédé de traitement suivant l'une quelconque des revendications 1 à 6, et qui a un flux d'eau, après traitement, supérieur d'au moins 50 % à celui que présente la membrane non traitée dans des conditions identiques d'essai.
